(19) Europäisches Patentamt
European Patent Office
Office européen des brevets

(11) **EP 4 046 294 B1**

(12) # EUROPEAN PATENT SPECIFICATION

(45) Date of publication and mention
of the grant of the patent:
**30.08.2023 Bulletin 2023/35**

(21) Application number: **19805234.2**

(22) Date of filing: **14.11.2019**

(51) International Patent Classification (IPC):
**H04B 10/2507** (2013.01)      **H04B 10/61** (2013.01)

(52) Cooperative Patent Classification (CPC):
**H04B 10/2507; H04B 10/616**

(86) International application number:
**PCT/EP2019/081273**

(87) International publication number:
**WO 2021/093952 (20.05.2021 Gazette 2021/20)**

(54) **DEVICE FOR COMPENSATING IMPERFECTIONS AT A COHERENT OPTICAL RECEIVER**

VORRICHTUNG ZUR KOMPENSATION VON IMPERFEKTIONEN AN EINEM KOHÄRENTEN
OPTISCHEN EMPFÄNGER

DISPOSITIF DE COMPENSATION D'IMPERFECTIONS D'UN RÉCEPTEUR OPTIQUE COHÉRENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.08.2022 Bulletin 2022/34**

(73) Proprietor: **Huawei Technologies Co., Ltd.
Shenzhen, Guangdong 518129 (CN)**

(72) Inventors:
• **KUSCHNEROV, Maxim
80992 Munich (DE)**
• **BLÜMM, Christian
80992 Munich (DE)**
• **CALABRO, Stefano
80992 Munich (DE)**

(74) Representative: **Roth, Sebastian
Mitscherlich PartmbB
Patent- und Rechtsanwälte
Karlstraße 7
80333 München (DE)**

(56) References cited:
**WO-A1-2013/102898     US-B2- 9 077 455**

• **RIOS-MULLER RAFAEL ET AL: "Blind Receiver
Skew Compensation and Estimation for
Long-Haul Non-Dispersion Managed Systems
Using Adaptive Equalizer", JOURNAL OF
LIGHTWAVE TECHNOLOGY, IEEE, USA, vol. 33,
no. 7, 1 April 2015 (2015-04-01), pages 1315-1318,
XP011575164, ISSN: 0733-8724, DOI:
10.1109/JLT.2014.2377582 [retrieved on
2015-03-09] cited in the application**
• **DA SILVA EDSON PORTO ET AL: "Widely Linear
Equalization for IQ Imbalance and Skew
Compensation in Optical Coherent Receivers",
JOURNAL OF LIGHTWAVE TECHNOLOGY, IEEE,
USA, vol. 34, no. 15, 1 August 2016 (2016-08-01),
pages 3577-3586, XP011618649, ISSN: 0733-8724,
DOI: 10.1109/JLT.2016.2577716 [retrieved on
2016-08-05]**

EP 4 046 294 B1

## Description

### TECHNICAL FIELD

The present invention relates to optical communications, in particular between an optical transmitter and a coherent optical receiver over an optical link. The invention provides a device for compensating imperfections at the coherent optical receiver, wherein the imperfections may be caused by the receiver and by the link, respectively. In particular, the device is configured to equalize a receive signal obtained from the receiver with two separate equalizers, based on a calculated transfer function of the link.

### BACKGROUND

Fiber-optic communications evolve continuously towards higher line rates and higher spectral efficiency. Coherent optics emerged as the technology of choice for long-haul and metro applications, and is gradually penetrating also the market of short-reach transmission.

As of recently, the current generation of coherent optics supports up to 600 Gb/s per carrier, whereas the next generation will enable line rates in excess of 800 Gb/s using 64-point Quadrature Amplitude Modulation (QAM) and even larger symbol constellations. Coherent optical technology is currently discussed for 40 km ER and 80 km ZR 400Gb/s Ethernet (400 GbE) applications. Beyond 400 GbE, coherent optical transceivers are regarded as the primary candidates for 10 km LR dark fiber interconnects.

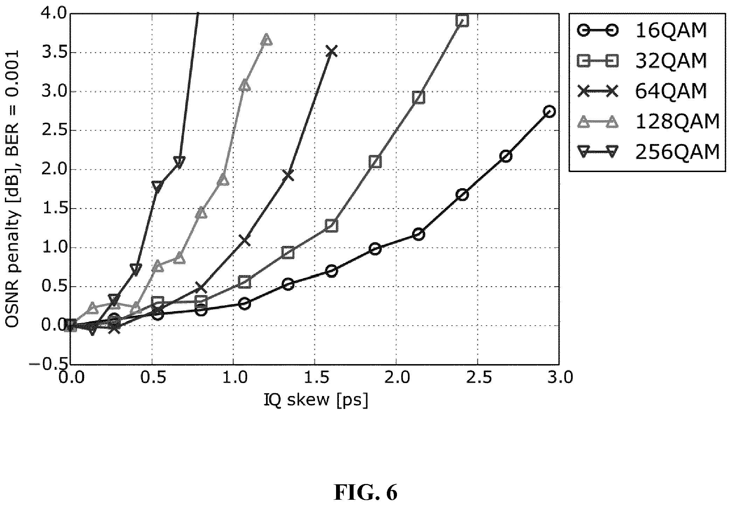

High-order constellations at high line rates are extremely sensitive to transponder imperfections. For example, even a small skew between the In-phase (I) and Quadrature (Q) components in the order of 5% of the symbol period produces a large transmission penalty of a few decibels (dBs). FIG. 6, which is reproduced from "G. Khanna et al., 'Joint Adaptive Pre-Compensation of Transmitter I/Q Skew and Frequency Response for High Order Modulation Formats and High Baud Rates', Proceedings of the Optical Networking and Communication Conference OFC 2015", illustrates the penalty in Optical Signal-to-Noise Ratio (OSNR) induced by IQ skew on several modulation formats at a symbol rate of 37.41 GBaud. A small mismatch in the latency of the I and Q lanes of 1 ps results already in a penalty of 1 dB for 37.41 GBaud 64QAM.

In fact, the differential group delay between the I and Q components is not constant over frequency, as it is assumed for the sake of simplicity by G. Khanna et al., but varies as a function of the frequency and, therefore, cannot be expressed by a one-dimensional parameter. In practice, this function exhibits a slope and ripple, especially at high frequencies, which makes its accurate estimation and compensation a difficult task.

Additionally, in unamplified short-reach communications the signal power is a scarce resource and, to make the most out of it, it is essential to operate the electrical driver and the modulator at the transmitter at high-power levels, and the electrical amplifiers at the receiver in the high-gain region, which exacerbates the impact of nonlinear distortion and also asks for nonlinear compensation.

IQ skew and nonlinearities are two prominent examples, but many more effects impair the performance of coherent optical transceivers, i.e. lead to imperfections. The most important imperfections, which occur both at the transmitter and at the receiver, include frequency-dependent IQ skew, frequency-dependent IQ imbalance, bandwidth limitations and nonideal amplitude and phase response, nonlinear distortion (typically with memory), and cross-talk among the four tributaries XI, XQ, YI, YQ, which are mapped to the I and Q components of two orthogonal polarization planes X and Y.

To enable the next generation of coherent optics, it is essential to mitigate these imperfections. Compensation techniques based on Digital Signal Processing (DSP) are especially appealing, because they leverage the benefits of coherent demodulation and relieve the requirements on the electro-optical components.

In general, both static and adaptive compensation techniques can be considered. However, static compensation, based on factory calibration, has several drawbacks. First, since component characteristics change over time, due to aging and temperature effects, the impairments are essentially time-varying, and should be continuously tracked. Further, factory calibration is time-consuming, often using external equipment, and therefore, impacts the production costs.

Transmitter imperfections can be mitigated by means of adaptive Digital Pre-Distortion (DPD). The adaptation can rely upon a local feedback at the transmitter, as it is described in "G. Khanna et al., 'A Robust Adaptive Pre-Distortion Method for Optical Communication Transmitters', IEEE Photonics Technology Letters, Vol. 28, No. 7 (2016)". Alternatively, DPD can be adapted using a feedback from the far-end Rx, as described in "G. Khanna et al., 'Adaptive Transmitter Pre-Distortion using Feedback from the Far-End Receiver', IEEE Photonics Technology Letters, Vol. 30, No. 3 (2018).

However, adaptive compensation of receiver imperfections remains an open problem.

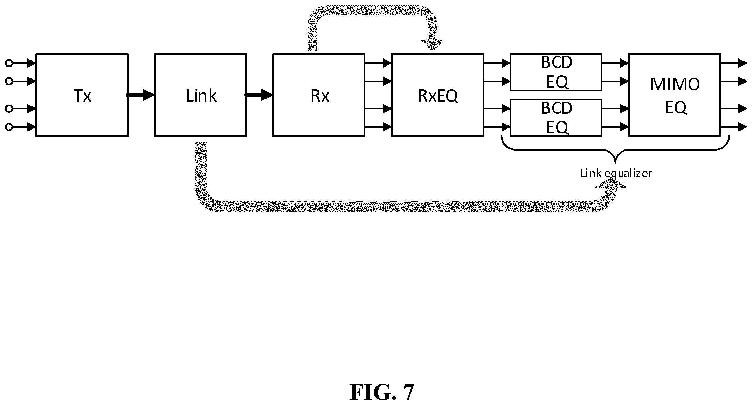

A first exemplary architecture to address the problem is shown in FIG. 7, which is based on "A. Matsushita et al. '10-WDM 64-GBaud PDM-64QAM Transmission over all-Raman Amplified 840 km SSMF using Digital Back Propagation', Proceedings of the European Conference on Optical Communication ECOC (2017), and "A. Matsushita et al. 'High-Spectral-Efficiency 600-Gbps/Carrier Transmission Using PDM-256QAM Format', IEEE Journal of Lightwave Technology, Vol. 37, No. 2 (2019), respectively.

In the architecture shown in FIG. 7, optical signals are represented by arrows with two-line compound type, whereas electrical signals corresponding to the four tributaries XI, XQ, YI, YQ are represented by arrows with single-line compound type. The transmitter (Tx) converts four electrical tributaries to an optical signal, whereas its receiver (Rx) counterpart implements the mapping of the optical signal to four electrical tributaries.

According to FIG. 7, link and Rx components are equalized at the receiver in the reverse reorder, as required by the laws of function composition. FIG. 7 shows in particular that the imperfections of the receiver are mitigated by a receiver equalizer (RxEQ), whereas the compensation of the link comprises a Bulk Chromatic Dispersion Equalizer (BCD EQ) and a Multiple-Input Multiple-Output (MIMO) equalizer, in order to cope with rotations of the State of Polarization (SOP) and Polarization Mode Dispersion (PMD). Additional modules, which may be used at the receiver, are not shown in FIG. 7, because they are irrelevant to the current discussion.

The main problem of the architecture shown in FIG. 7 is the derivation of a suitable adaptation criterion for the RxEQ.

Matsushita et al. describe the following procedure to adapt the RxEQ. A pre-equalized signal consisting of a known Pseudo-Random Binary Sequence (PRBS) and a preamble is transmitted in a back-to-back optical configuration, i.e., in the absence of significant Chromatic Dispersion (CD), high-order PMD, and other link effects. The amount of carrier frequency offset, laser phase noise, first order PMD, and polarization rotation, is estimated from the received data, and is used to obtain the target output for the RxEQ. By using the received signal and the target output, the inverse function that compensates for the receiver frequency response for each lane is computed.

Unfortunately, this approach suffers from some serious limitations. First, the approach requires the transmission of known data sequences (PRBS) and training sequences (preamble). Second, the approach cannot cope with high-order PMD, polarization-dependent loss (PDL) and CD, respectively. Therefore, the RxEQ can be calibrated in the factory, but it cannot be adapted during operation. Additionally, the approach of Matsushita et al. can only be used to train a linear RxEQ, and does not cope with nonlinear distortions.

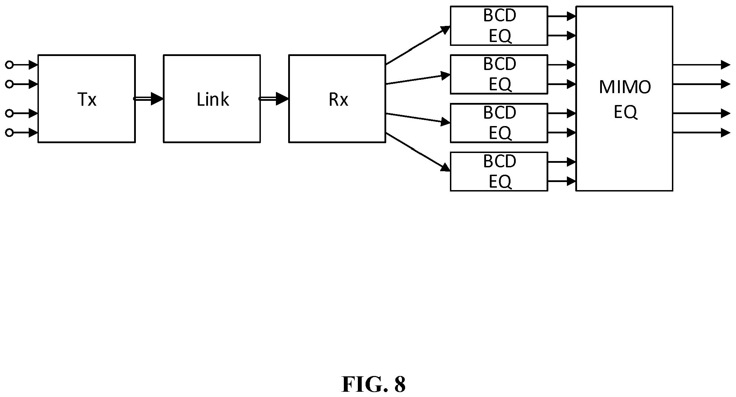

A second exemplary architecture is shown in FIG. 8, which is based on "R. Rios-Müller et al., 'Blind Receiver Skew Compensation for Long-Haul Non-Dispersion Managed Systems', Proceedings of the European Conference on Optical Communication ECOC (2014)", and on 'R. Rios-Müller et al. "Blind Receiver Skew Compensation and Estimation for Long-Haul Non-Dispersion Managed Systems Using Adaptive Equalizer", IEEE Journal of Lightwave Technology, Vol. 33, No. 7 (2015)", respectively.

In the architecture shown in FIG. 8, which adheres to the same graphical conventions as adopted in FIG. 7, the compensation of receiver imperfections occurs in the MIMO EQ after the BCD EQ. The BCD EQ processes, separately, each real tributary XI, XQ, YI, YQ, generating 4 complex tributaries. In essence, per-lane BCD EQs with real inputs and complex outputs are used to keep the I and Q components separate. An $8 \times 4$ MIMO equalizer compensates adaptively amplitude and phase response of the receiver. Equalization of linear receiver effects can be applied in the MIMO EQ after the BCD EQ, because scalar linear filters commute.

A significant drawback of the architecture shown in FIG. 8 is the use of an $8 \times 4$ instead of a $4 \times 4$ MIMO EQ, with an effective increase of the complexity of the MIMO EQ by a factor of two. Further, this architecture cannot compensate nonlinear receiver impairments, because the huge memory of the BCD EQ stretches immensely the effect of nonlinearities, making a compensation via the MIMO EQ unfeasible.

US 9,077,455 B2 discloses an optical receiver having a MIMO equalizer.

WO 2013/102898 A1 discloses symbol spaced adaptive MIMO equalization for ultra high bit rate optical communication systems.

SUMMARY

In view of the above-mentioned challenges and drawbacks, embodiments of the present invention aim to improve the compensation of imperfections at a coherent optical receiver. An objective is to provide a device for compensating such imperfections without the conventional limitations. In particular, the device should be usable during receiver operation. The device should further not require any transmission of known data sequences and training sequences. The device should be able to cope with nonlinear impairments. In addition, the device should be able to cope with high-order PMD, PDL and CD. The device should also be of only low or at most moderate complexity.

The objective is achieved by the embodiments of the invention as described in the enclosed independent claims. Advantageous implementations of the embodiments of the invention are further defined in the dependent claims.

The embodiments of the invention base on some considerations made by the inventors with respect to FIG. 7. In particular, that the exact implementation of Tx and Rx dictates the nature and the amount of the transceiver imperfections, and in particular the implementation of the receiver affects the design of the compensation unit. Thus, embodiments of the invention should be based on an agnostic adaptation algorithm that can be applied to any equalizer structure.

Usually, adaptation of an equalizer requires knowledge of the input signal and of the target output. However, in the architecture of FIG. 7, only the target signal after the whole demodulator is known, rather than directly after the RxEQ. A possibility would be to resort to a gradient descent algorithm based on gradient backpropagation via the chain rule. This type of algorithm is customarily used to train deep neural networks. However, for use in the architecture of FIG. 7, due to the large number of taps of the BCD EQ, the computational burden of gradient backpropagation would be impractically high.

The embodiments of the invention therefore base on the following considerations:

- Link and Rx components should be equalized in the reverse order, as in the structure shown in FIG. 7, in order to enable compensation of nonlinear impairments and to keep the MIMO EQ simple.
- The response of the link should be estimated during normal receiver operation. For instance, periodically, over a transmission link using the settings of BCD EQ, MIMO EQ, carrier frequency offset estimator (CFOE) and carrier phase estimator (CPE). No special training sequences are then required, and all-order PMD and PDL can be estimated.
- The target signal for the adaptation of the RxEQ should be computed by simulation. For instance, simulation based on the transmission of post Forward Error Correction (FEC) or, alternatively, pre-FEC decided bits over a model of the link. A priori knowledge of the transmitted sequence is then not required.

A first aspect of the invention provides a device for compensating imperfections at a coherent optical receiver, the device being configured to: obtain a receive signal from the receiver; adapt a first equalizer based on a target output for the first equalizer; compensate the receive signal with the first equalizer in order to compensate imperfections caused by the receiver; and compensate the receive signal further with a second equalizer, in order to compensate imperfections caused by a link between a transmitter and the receiver; wherein the device is further configured to: estimate a channel response based on a configuration of the second equalizer; extract a transfer function of the link from the channel response; and calculate the target output for the first equalizer based on the transfer function and based on bit decisions obtained from the receive signal.

The main advantage of the device of the first aspect, with respect to the architecture shown in FIG. 8, is that a 4×4 instead of 8×4 MIMO EQ can be used as the second equalizer. Another advantage is the possibility to compensate, besides linear effects, also nonlinear distortions.

Different from the architecture shown in FIG. 7, the device of the first aspect does not require the use of special training sequences, and also no knowledge of the transmit data. Further, the device of the first aspect can estimate all-order PMD and PDL, and can be used to adapt the first equalizer (e.g., the RxEQ) during normal operation, rather than only during factory calibration in back-to-back configuration.

In summary, the device of the first aspect thus offers several advantages over conventional approaches. Since it does not require factory calibration, time and money can be saved. Notwithstanding, if desired, it can also be used for factory calibration. Further, the device supports estimation and compensation of all kinds of per-tributary and cross-tributary receiver impairments, including both linear and nonlinear effects. The device can track temperature-dependent effects and aging during normal operation and, thus, can guarantee an accurate impairment compensation from the beginning to the end of the product life cycle. Since no special sequences or preambles are needed, the proposed device is further compatible with any DSP frame format, and current or future standard.

The adaptation algorithm performed by the device is advantageously agnostic to the implementation of the first equalizer. In particular, the implementation of the first equalizer can be scaled, and can be adapted in accordance to the needs dictated by the electro-optical components and the available computational resources. Finally, the adaptation algorithm performed by the device can be implemented in software, e.g. on a microcontroller, rather than in ASIC gates, and therefore has potentially a lower impact on chip complexity and power consumption.

In an implementation form of the first aspect, the configuration of the second equalizer comprises a set of tap coefficients.

This allows a particularly accurate estimation of the channel response.

In an implementation form of the first aspect, the device is configured to: calculate the target output for the first equalizer by simulating the transmission of the bit decisions over a model of the link determined based on the transfer function.

By simulating the transmission of the bits over a modelled link, a particularly accurate target output can be obtained. Especially, regardless of the type of distortions caused by link and receiver, respectively.

In an implementation form of the first aspect, the device is configured to: calculate the target output for the first equalizer based on the bit decisions obtained by a threshold device or by a Forward Error Correction (FEC) decoder.

Thus, two options are provided. This is possible due to the robustness of the adaption algorithm to input errors.

In an implementation form of the first aspect, the device is configured to: estimate the channel response in the frequency domain, as a product of the inverse matrix response of the second equalizer and a frequency response fulfilling the Nyquist criterion for an Inter Symbol Interference (ISI) free transmission.

This exploits the fact that a full-response equalizer attempts to cancel ISI. With this additional knowledge, an efficient estimation of the channel response is possible.

In an implementation form of the first aspect, the extraction of the transfer function comprises preserving effects of polarization-dependent loss (PDL), while removing effects of bandwidth limitations, or comprises removing the effects of the PDL.

In an implementation form of the first aspect, the device is configured to: extract the transfer function by estimating a receiver response in the channel response and removing the receiver response from the channel response.

In an implementation form of the first aspect, the device is configured to: extract the transfer function in the frequency domain, by manipulating a diagonal matrix of singular value decomposition of the channel response.

In an implementation form of the first aspect, the manipulating of the diagonal matrix of singular value decomposition comprises dividing the matrix by its largest element, or comprises replacing the matrix by an identity matrix of same size as the matrix.

In an implementation form of the first aspect, the first equalizer is configured to independently process each of four real tributaries of the receive signal; or the first equalizer is configured to jointly process four real tributaries of the receive signal.

In an implementation form of the first aspect, the first equalizer is configured to separately process two X real tributaries of the receive signal and, respectively, two Y real tributaries of the receive signal, wherein X and Y are two orthogonal states of polarization.

In an implementation form of the first aspect, the first equalizer comprises a receiver equalizer, and the second equalizer comprises a Multiple Input Multiple Output (MIMO) equalizer, and a Bulk Chromatic Dispersion (BCD) equalizer.

Thus, the device of the first aspect is compatible with various types of equalizers.

A second aspect of the invention provides a method for compensating imperfections at a coherent optical receiver, the method comprising: obtaining receive signal from the receiver; adapting a first equalizer based on a target output for the first equalizer; compensating the receive signal with the first equalizer, in order to compensate imperfections caused by the receiver; and compensating the receive signal further with a second equalizer, in order to compensate imperfections caused by a link between a transmitter and the receiver; wherein the method further comprises: estimating a channel response based on a configuration of the second equalizer; extracting a transfer function of the link from the channel response; and calculating the target output for the first equalizer based on the transfer function and based on bit decisions obtained from the receive signal.

In an implementation form of the second aspect, the configuration of the second equalizer comprises a set of tap coefficients.

In an implementation form of the second aspect, the method comprises: calculating the target output for the first equalizer by simulating the transmission of the bit decisions over a model of the link determined based on the transfer function.

In an implementation form of the second aspect, the method comprises: calculating the target output for the first equalizer based on the bit decisions obtained by a threshold device or by a Forward Error Correction (FEC) decoder.

In an implementation form of the second aspect, the method comprises: estimating the channel response in the frequency domain, as a product of the inverse matrix response of the second equalizer and a frequency response fulfilling the Nyquist criterion for an ISI free transmission.

In an implementation form of the second aspect, the extraction of the transfer function comprises preserving effects of PDL, while removing effects of bandwidth limitations, or comprises removing the effects of the PDL.

In an implementation form of the second aspect, the method comprises: extracting the transfer function by estimating a receiver response in the channel response and removing the receiver response from the channel response.

In an implementation form of the second aspect, the method comprises: extracting the transfer function in the frequency domain, by manipulating a diagonal matrix of singular value decomposition of the channel response.

In an implementation form of the second aspect, the manipulating of the diagonal matrix of singular value decomposition comprises dividing the matrix by its largest element, or comprises replacing the matrix by an identity matrix of same size as the matrix.

In an implementation form of the second aspect, the method comprises: independently processing, with the first equalizer, each of four real tributaries of the receive signal; or jointly processing, with the first equalizer, four real tributaries of the receive signal.

In an implementation form of the second aspect, the method comprises: separately processing, with the first equalizer, two X real tributaries of the receive signal and, respectively, two Y real tributaries of the receive signal, wherein X and Y are two orthogonal states of polarization.

In an implementation form of the second aspect, the first equalizer comprises a receiver equalizer, and the second equalizer comprises a MIMO equalizer, and a BCD equalizer.

The method of the second aspect and its implementation forms achieve the same advantages and effects as described for the device of the first aspect and its respective implementation forms.

A third aspect of the invention provides a computer program comprising a program code for performing the method of the second aspect and its implementation forms, when executed on a computer.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present invention will be explained in the following description of specific embodiments in relation to the enclosed drawings, in which

FIG. 1    shows a device according to an embodiment of the invention.

FIG. 2    shows an exemplary implementation of a device according to an embodiment of the invention.

FIG. 3    shows an estimation of the overall channel response, as performed by a device according to an embodiment of the invention.

FIG. 4    shows a first design (a), a second design (b), and a third design (c), for the first equalizer as used by a device according to an embodiment of the invention.

FIG. 5    shows a method according to an embodiment of the invention.

FIG. 6    shows an OSNR penalty caused by frequency flat skew at 37.41 GBaud with 0.2 roll-off.

FIG. 7    shows a first example architecture for compensating imperfections of a coherent optical receiver.

FIG. 8    shows a second example architecture for compensating imperfections of a coherent optical receiver.

DETAILED DESCRIPTION OF EMBODIMENTS

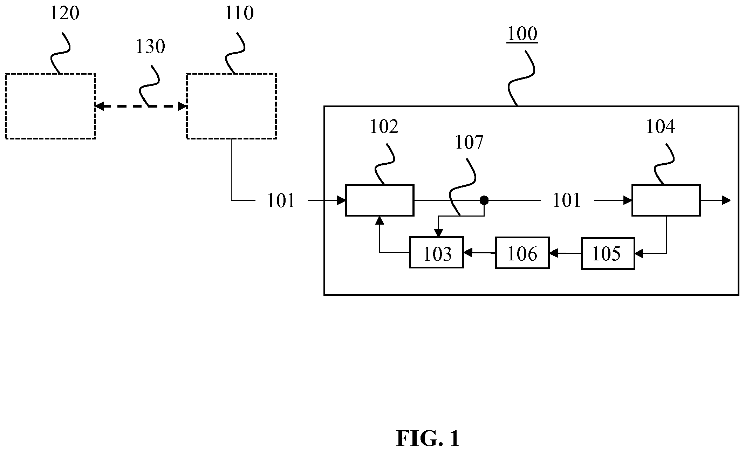

FIG. 1 shows a device 100 according to an embodiment of the invention. The device 100 is configured to compensate imperfections at a coherent optical receiver 110. The device 100 may be included in the receiver 110, e.g. as an Rx DSP, or may be associated with or connected to the receiver 110. The imperfections that can be compensated by the device 100 include imperfections caused by the receiver 110, and include imperfections caused by a link 130 between the receiver 110 and a transmitter 120.

The device 100 may comprise processing circuitry (not shown) configured to perform, conduct or initiate various operations of the device 100 described in the following. The processing circuitry may comprise hardware and software. The hardware may comprise analog circuitry or digital circuitry, or both analog and digital circuitry. The digital circuitry may comprise components such as application-specific integrated circuits (ASICs), fieldprogrammable arrays (FPGAs), digital signal processors (DSPs), or multi-purpose processors. In one embodiment, the processing circuitry comprises one or more processors and a non-transitory memory connected to the one or more processors. The non-transitory memory may carry executable program code which, when executed by the one or more processors, causes the device 100 to perform, conduct or initiate the operations or methods described below.

In particular, the device 100 is configured to obtain a receive signal 101 from the receiver 110. For instance, the receiver 110 may send the receive signal 101 to the device 100, or the device 100 may be included in the receiver 100, e.g. as an Rx DSP, in order to process the receive signal 101. The device 100 is further configure to adapt a first equalizer 102 based on a target output 103 for the first equalizer 102, wherein the first target output 103 is obtained by the device 100 as described below. Then, the device 100 is configured to compensate the receive signal 101 with the (adapted) first equalizer 102, in order to compensate the imperfections caused by the receiver 110.

The device is further configured to compensate the receive signal 101 further with a second equalizer 104, i.e. is configured to compensate the receive signal 101 that was compensated before with the first equalizer 102 with the second equalizer 104, in order to compensate the imperfections caused by the link 130 between the transmitter 120 and the receiver 110. In particular, the first equalizer 102 applies corrections to the receive signal 101, thus generating at its output a modified receive signal 101, which is subsequently further processed by the second equalizer 104.

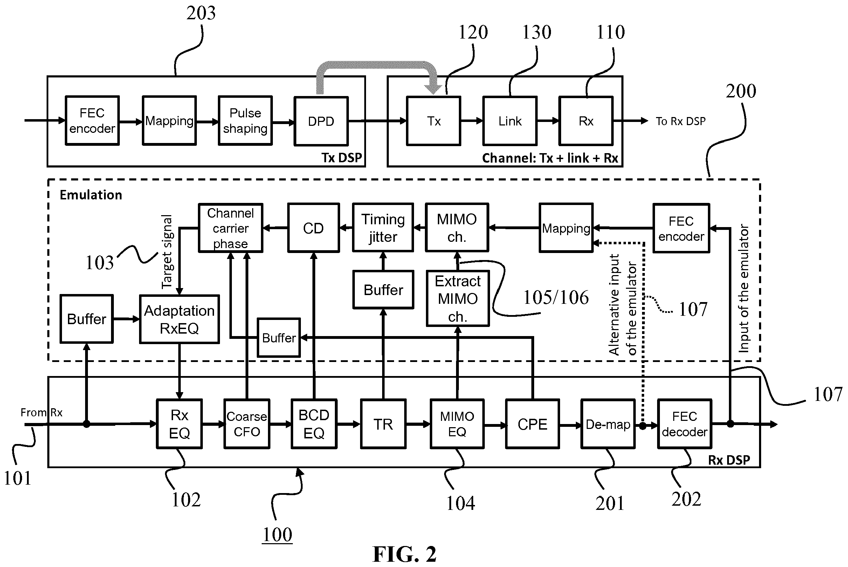

For the above compensation procedure, the device 100 is further configured to calculate or estimate the target output 103 for the first equalizer 102, based on which the first equalizer is adapted. The device 100 is, to this end, configured to calculate or estimate a channel response 105 based on a configuration of the second equalizer 104, wherein the configuration may comprise a set of tap coefficients (for the second equalizer 104). Then, the device 100 is configured to calculate or extract a transfer function 106 of the link 130 from the channel response 105, and finally to calculate or estimate the target output 103 for the first equalizer 102 based on the transfer function 105, and further based on bit decisions 107 obtained from the receive signal 101. These bit decisions 107 may be obtained by a threshold device 201 of the device 100 or may be obtained by a FEC decoder 202 of the device 100. These bit decisions 107 are obtained from the receive signal 101 after the second equalizer 104, i.e. from the receive signal that was processed or modified by both the first equalizer 102 and the second equalizer 104. In particular, the device 100 may calculate the target output 103 by simulating (e.g., using a simulation block 200) the transmission of the bit decisions 107 over a model of the link 130, wherein the model is determined based on the transfer function 106 (see FIG. 2 for detailed information).

FIG. 2 shows a device 100 according to an embodiment of the invention, which bases on the embodiment shown in FIG. 1. The device 100 of FIG. 2 comprises further, optional features, wherein same features in FIG. 1 and FIG. 2 are provided with the same reference signs, and function likewise. In particular, FIG. 2 illustrates the device 100 by means of an exemplary block diagram (of device components, and "external" components of the transmitter 120 and receiver 110, respectively).

In particular, a Tx DSP 203 of the transmitter 120 may comprise a FEC encoder, which encodes incoming payload bits in FEC code words. Further, the Tx DSP 203 may comprise a mapping block, which subsequently maps the encoded bits to constellation symbols that are projected onto the four tributaries XI, XQ, YI, YQ. A pulse shaping block of the Tx DSP 203 may further upsample the symbol stream, and may realize spectral shaping, e.g. according to a Root Raised Cosine (RRC) profile with a desired roll-off factor. A DPD of the Tx DSP 203, e.g. implemented according to any conventional method, may further compensate the imperfections of the transmitter 120.

The transmitter 120 may generally convert four electrical tributaries to an optical signal, and the receiver 110 may map the optical signal back to four electrical tributaries. Typically the transmitter 120 includes, to this end, a digital-to-analog converter (DAC), one or more driver amplifiers, a laser source, and a modulator, e.g. a dual-polarization IQ Mach-Zehnder modulator. A typical coherent receiver 110 includes a local laser oscillator, one or more 90°-hybrid couplers, one or more photodetectors, and an analog-to-digital converter (ADC). The link 130 between the transmitter 120 and the receiver 110 may include several spans of optical fiber, one or more optical fiber amplifiers, one or more optical filters, and one or more multiplexers and/or de-multiplexers. A channel may include the transmitter 120, the link 130, and the receiver 110.

The device 100 (here in FIG. 2 exemplarily implemented as Rx DSP 100) comprises the first equalizer 102 (here exemplarily implemented as "RxEQ"), which is used to compensate the imperfections of the receiver components. In the exemplary implementation of the device 100 shown in FIG. 2, the subsequent blocks may include: a module for the coarse compensation of the carrier frequency offset ("Coarse CFO"); a third equalizer (here exemplarily implemented as "BCD EQ", which may be part of the second equalizer 104); a timing recovery ("TR") block; the second equalizer 104 (here exemplarily implemented including a "MIMO EQ"), which also implements down-sampling to symbol rate; a carrier phase estimator ("CPE"); a de-mapper ("De-map"), which de-maps the noisy demodulated symbols to hard decided pre-FEC bits or soft-decision metrics; and finally a "FEC decoder", which provides post-FEC decided bits. The order of the equalization and timing recovery modules can vary, and additional modules can be included without affecting the essence of the device 100.

Since the aim of the first equalizer 102 is the compensation of the receiver imperfections, its target output 103 should coincide with the input of the receiver 110 or, equivalently, with the output of the link 130. This target output 103, which is not directly observable, can be calculated or estimated in the device 100 by means of an emulation or simulation block 200 of the device 100 (enclosed in the dashed box of FIG. 2).

The input of this block 200 is, preferably, the post-FEC decided bits (as the decision bits 107) or, alternatively, the pre-FEC decided bits (as the decision bits 107). In the latter case, an equivalent implementation may include taking pre-FEC decided symbols instead of pre-FEC decided bits, and skipping both the FEC encoder and the mapping module in the block 200. It can be observed that the input to the block 200 does not need to be completely errorfree, because the adaptation algorithm performed by the device 100 can tolerate a small percentage of wrong decisions.

Inside the block 200, the decided bits 107 may be processed by a "Mapping" module, which may mimic the functionality of the Mapping module within the Tx DSP 203. The resulting symbols may enter an emulated "MIMO channel", which may implement up-sampling, spectral shaping, all-order PMD and, optionally, PDL. The parameters of the MIMO channel can be configured by the "extract MIMO channel block", whose functionality is to calculate or estimate the channel response 105 and to calculate or extract the transfer function 106 of the link 130 from the channel response, and will be detailed below.

The subsequent "Timing Jitter" module of the block 200 may re-introduce timing jitter, which was removed in the device 100 by the TR. Similarly, the "CD" block may re-apply the CD that was removed by the BCD EQ. Finally, the "Channel carrier phase" module may apply the carrier frequency offset and the carrier phase estimated and corrected by the "Coarse CFO" block and the "CPE" block of the device 100, respectively.

The resulting signal is used as the target output 103 for the adaptation of the first equalizer 102, which may be carried out within a dedicated adaptation module. The first equalizer 102 can be set according to any customary criterion, e.g. according to the Least Mean Square (LMS) criterion between the actual output and the target output 103. The adaption of the first equalizer 102 can further be performed by solving the least squares problem via the normal equation, or via a gradient descent method. To track time-varying effects, the first equalizer 102 can further be adapted continuously, or only during one or more dedicated time windows, e.g. it can be adapted in a periodic fashion.

To compensate for latency of the device 100 and the block 200, respectively, several buffers may be introduced. As shown in FIG. 2, the input of the first equalizer 102 may be buffered, before entering the module that adapts the first equalizer 102. Similarly, the corrected carrier phase and timing jitter may be buffered, before being re-applied in the corresponding modules of the block 200. Other parameters, like CD and CFO, usually do not require any buffering, because they are quasi-static by nature and, therefore, do not vary significantly during the processing latency.

As explained above with respect to FIG. 1, a main part of the adaption algorithm performed by the device 100 is the estimation of the link transfer function 106, which is performed in two steps:

> a) Estimation of the overall channel response 105 from the configuration, e.g. the tap coefficients, of the second equalizer 104. The overall channel response 105 may include a link response and, e.g. partially, a receiver response.
> b) Extraction of the transfer function 106 of the link 130, e.g. only the link 130, from the overall channel response 105.

The two steps a) and b) can respectively be implemented within the "extract MIMO channel block" module provided in the block 200 shown in FIG. 2.

Step a) consist in the estimation or calculation of the overall channel response 105. Thereby, CD, carrier frequency and phase, and timing jitter may be available from the corresponding compensation blocks in the device 100. However, the MIMO channel, including PMD, PDL and filtering effects, may not available in a direct form.

In some cases special training sequences, as e.g. constant-amplitude zero-autocorrelation (CAZAC) sequences, could be inserted in the transmitted stream to estimate the MIMO channel. This solution, however, may result in an increase in the symbol rate required to compensate for the training overhead, is currently not adopted in any major optical standard, and thus possible but not preferred.

Rather, preferably, the MIMO channel is determined or calculated based on the channel response 105 extracted from the configuration, e.g. from the tap coefficients, of the second equalizer 104. This step is not trivial, because the response of a down-sampling filter, like the MIMO EQ (as implementation of the second equalizer 104), is aliased in frequency, and cannot be unambiguously inverted. As discussed below, to invert e.g. the MIMO EQ, additional knowledge about the properties of full-response equalizers may advantageously be exploited. The result is quite exact, if noise is injected before PDL and bandwidth limitation. In all practical cases, it is at least a good approximation, since DPD compensates the bandwidth limitations of the transmitter components, and since optical noise is obviously added before the bandwidth limitations of the receiver 110. It is here assumed that an approximate DPD is applied to the transmitter signal, before any further steps for computing or adapting the first equalizer 102.

In detail, the fact that a full-response equalizer attempts to cancel ISI may be advantageously exploited. In particular, a zero-forcing (ZF) MIMO EQ cancels ISI exactly at the expense of noise enhancement, whereas a minimum mean squared error (MMSE) MIMO EQ cancels ISI exactly, if the conditions mentioned in the previous paragraph are met and approximately otherwise.

Here, it is assumed that the cascade of the MIMO channel with frequency response H (including spectral shaping, link 130 and, at least partially, receiver 110) and the MIMO equalizer with frequency response W fulfils the Nyquist condition for ISI-free transmission. In mathematics, using complex numbers, this is formulated as

$$W \cdot H \approx h_n \cdot I,$$

where $h_n$ is a scalar Nyquist spectrum, e.g. a Raised Cosine (RC) spectrum and $I$ is the identity matrix. Consequently, the frequency response of the MIMO channel can be estimated as

$$H \approx h_n \cdot W^{-1}.$$

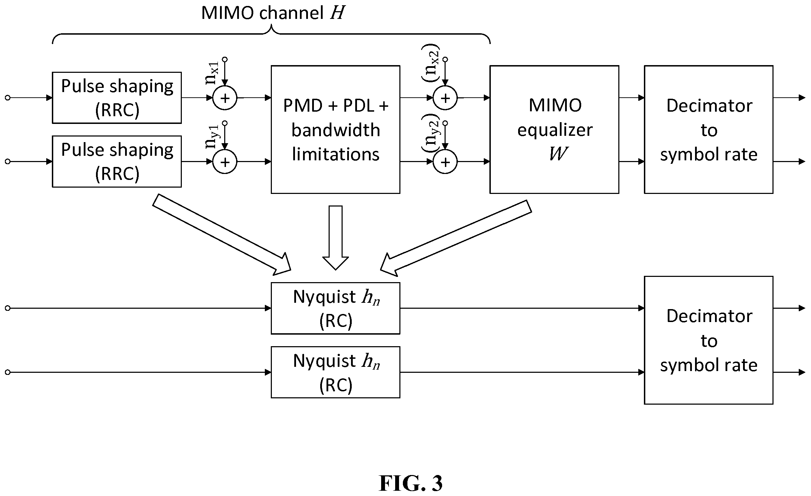

FIG. 3 visualizes an implementation of step a). The cascade of the MIMO channel, comprising pulse shaping, e.g. realizing a RRC profile, PMD, PDL and bandwidth limitations, and the MIMO equalizer is approximately equivalent to a Nyquist, e.g. a RC, response. As discussed above, the approximation is quite close, if the noise contributions $n_{x1}$ and $n_{y1}$ are dominant with respect to $n_{x2}$ and $n_{y2}$.

Step b) consists in the extraction of the transfer function 106 of the link 130 from the overall channel response 105, which is calculated or estimated in step a). Notably, the block 200 in FIG. 2 aims at computing the output of the link 130 before the receiver 110. Therefore, the receiver response should be removed from the overall channel response H, in order to obtain the desired configuration of the MIMO channel in the block 200.

To perform this task, first a singular value decomposition (SVD) may be applied to the matrix channel response H and obtains

$$H(f) = U(f) \cdot \begin{bmatrix} \sigma_1(f) & 0 \\ 0 & \sigma_2(f) \end{bmatrix} \cdot V^H(f),$$

where $U(f)$ and $V(f)$ are unitary matrices and the singular values $\sigma_1(f)$ and $\sigma_2(f)$ are real and non-negative numbers with $\sigma_1(f) \geq \sigma_2(f)$.

Thereafter, the contributions of link 130 (PMD and PDL) and receiver 110 (bandwidth limitation) may be identified and separated, and the part corresponding to the link 130 only may be extracted. The contributions due to all-order PMD and PDL may be obtained in the frequency domain as

$$H_{PMD,PDL}(f) = U(f) \cdot \begin{bmatrix} 1 & 0 \\ 0 & \frac{\sigma_2(f)}{\sigma_1(f)} \end{bmatrix} \cdot V^H(f),$$

where the normalization of the singular values by $\sigma_1(f)$ preserves the PDL information, but removes the bandwidth limitations. Alternatively, the effect of PDL is removed and the contribution of all-order PMD is obtained only as

$$H_{PMD}(f) = U(f) \cdot V^H(f).$$

If the MIMO channel module shown in FIG. 2 is configured to implement $H_{PMD,PDL}$, the first equalizer 102 may be adapted to compensate purely receiver effects. Alternatively, if the MIMO channel implements $H_{PMD}$, the first equalizer 102 may attempt to correct PDL as well. In practice, both solutions are acceptable and lead to equivalent good performances.

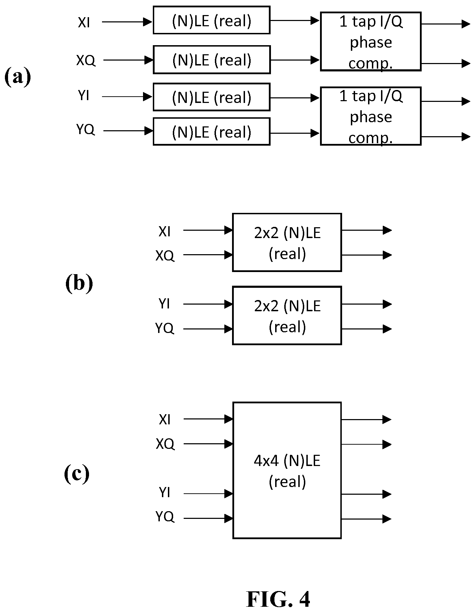

As already mentioned, the proposed adaptation algorithm performed by the device 100 is agnostic with respect to the structure of the first equalizer 102. Nevertheless, in the following some design options are described for the first equalizer 102, with respect to (a), (b) and (c) in FIG. 4.

FIG. 4 illustrates a first design option (a). Since the transponder imperfections arise mostly in the electrical domain, where the four tributaries are independently processed, the first equalizer 102 can operate on the four real tributaries rather than on the complex baseband signals. Compensation of quadrature error, which asks for joint IQ processing, may be delegated to a single-tap I/Q phase compensator after four separate real linear or nonlinear equalizers (LEs or NLEs).

Further, FIG. 4 illustrates a second design option (b), which uses two 2×2 LEs or NLEs operating separately on the X and Y tributaries. In this option, the main equalizers compensate for quadrature error and IQ-cross talk along with the remaining per-tributary effects.

Finally, FIG. 4 illustrates a third design option (c), which implements the first equalizer 102 as a 4×4 LE or NLE, and is able to compensate for per-tributary effects, quadrature error and any type of cross-talk among the four tributaries XI, XQ, YI, YQ, which might arise for instance due to electromagnetic interference among the respective lanes in the receiver 110.

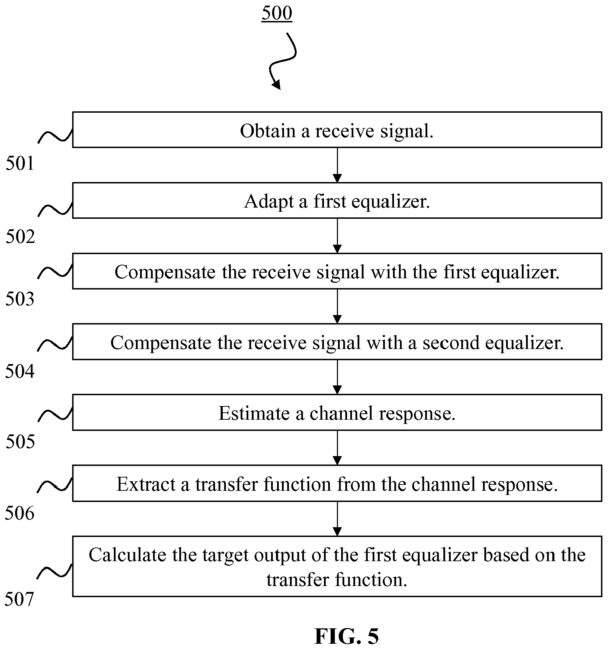

FIG. 5 shows a method 500 according to an embodiment of the invention. The method 500 is suitable for compensating imperfections at a coherent optical receiver 110. In particular, the method 100 may be performed in the receiver 110, for instance, by an Rx DSP. The method 500 may be performed by the device 100 shown in FIG. 1 and 2, which may be or be included in the Rx DSP.

The method 500 comprises: a step 501 of obtaining a receive signal 101 from the receiver 110; a step 502 of adapting a first equalizer 102 based on a target output 103 for the first equalizer 102; a step 503 of compensating the receive signal 101 with the first equalizer 102, in order to compensate imperfections caused by the receiver 110; and a step 504 of compensating the receive signal 101 further with a second equalizer 104, in order to compensate imperfections caused by a link 130 between a transmitter 120 and the receiver 110.

The method 500 further comprises: a step 505 of estimating a channel response 105 based on a configuration of the second equalizer 104; a step 506 of extracting a transfer function 106 of the link 130 from the channel response 105; and a step 507 of calculating the target output 103 for the first equalizer 102 based on the transfer function 106 and based on bit decisions 107 obtained from the receive signal 101.

The invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Device (100) for compensating imperfections at a coherent optical receiver (110), the device (100) being configured to:

   obtain a receive signal (101) from the receiver (110);
   adapt a first equalizer (102) based on a target output (103) for the first equalizer (102);
   compensate the receive signal (101) with the first equalizer (102), in order to compensate imperfections caused by the receiver (110); and compensate the receive signal (101) further with a second equalizer (104), in order to compensate imperfections caused by a link (130) between a transmitter (120) and the receiver (110); wherein the device (100) is **characterized by** being configured to:

> estimate a channel response (105) based on a configuration of the second equalizer (104);
> extract a transfer function (106) of the link (130) from the channel response (105); and calculate the target output (103) for the first equalizer (102) based on the transfer function (106) and based on bit decisions (107) obtained from the receive signal (101).

2. Device (100) according to claim 1, wherein: the configuration of the second equalizer (104) comprises a set of tap coefficients.

3. Device (100) according to claim 1 or 2, configured to: calculate the target output (103) for the first equalizer (102) by simulating (200) the transmission of the bit decisions (107) over a model of the link (130) determined based on the transfer function (106).

4. Device (100) according to one of the claims 1 to 3, configured to: calculate the target output (103) for the first equalizer (103) based on the bit decisions (107) obtained by a threshold device (201) or by a Forward Error Correction, FEC, decoder (202).

5. Device (100) according to one of the claims 1 to 4, configured to: estimate the channel response (105) in the frequency domain, as a product of the inverse matrix response of the second equalizer (104) and a frequency response fulfilling the Nyquist criterion for an Inter Symbol Interference, ISI, free transmission.

6. Device (100) according to one of the claims 1 to 5, wherein: the extraction of the transfer function (106) comprises preserving effects of polarization-dependent loss, PDL, while removing effects of bandwidth limitations, or comprises removing the effects of the PDL.

7. Device (100) according to one of the claims 1 to 6, configured to: extract the transfer function (106) by estimating a receiver response in the channel response (105) and removing the receiver response from the channel response (105).

8. Device (100) according to one of the claims 1 to 7, configured to: extract the transfer function (106) in the frequency domain, by manipulating a diagonal matrix of singular value decomposition of the channel response (105).

9. Device (100) according to claim 8, wherein: the manipulating of the diagonal matrix of singular value decomposition comprises dividing the matrix by its largest element, or comprises replacing the matrix by an identity matrix of same size as the matrix.

10. Device (100) according to one of the claims 1 to 9, wherein:

> the first equalizer (102) is configured to independently process each of four real tributaries of the receive signal (101); or the first equalizer (102) is configured to jointly process four real tributaries of the receive signal (101).

11. Device (100) according to one of the claims 1 to 9, wherein: the first equalizer (102) is configured to separately process two X real tributaries of the receive signal (101) and, respectively, two Y real tributaries of the receive signal, wherein X and Y are two orthogonal states of polarization.

12. Device (100) according to one of the claims 1 to 11, wherein:

> the first equalizer (102) comprises a receiver equalizer, and the second equalizer (104) comprises a Multiple Input Multiple Output, MIMO, equalizer, and a Bulk Chromatic Dispersion, BCD, equalizer.

13. Method (500) for compensating imperfections at a coherent optical receiver (110), the method (500) comprising:

> obtaining (501) a receive signal (101) from the receiver (110);
> adapting (502) a first equalizer (102) based on a target output (103) for the first equalizer (102);
> compensating (503) the receive signal (101) with the first equalizer (102), in order to compensate imperfections caused by the receiver (110); and
> compensating (504) the receive signal (101) further with a second equalizer (104), in order to compensate imperfections caused by a link (130) between a transmitter (120) and the receiver (110);

wherein the method (500) is **characterized in that** it comprises:

estimating (505) a channel response (105) based on a configuration of the second equalizer (104);

extracting (506) a transfer function (106) of the link (130) from the channel response (105); and

calculating (507) the target output (103) for the first equalizer (102) based on the transfer function (106) and based on bit decisions (107) obtained from the receive signal (101).

14. Method (500) according to claim 13, wherein the method (500) comprises:
calculating the target output (103) for the first equalizer (102) by simulating (200) the transmission of the bit decisions (107) over a model of the link (130) determined based on the transfer function (106).

15. Computer program comprising a program code for performing the method (500) of claim 13 or 14 when executed on a computer.

**Patentansprüche**

1. Vorrichtung (100) zur Kompensation von Imperfektionen an einem kohärenten optischen Empfänger (110), wobei die Vorrichtung (100) ausgelegt ist zum:

Erhalten eines Empfangssignals (101) vom Empfänger (110);

Anpassen eines ersten Entzerrers (102) basierend auf einem Zielausgang (103) für den ersten Entzerrer (102);

Kompensieren des Empfangssignals (101) mit dem ersten Entzerrer (102), um durch den Empfänger (110) verursachte Imperfektionen zu kompensieren; und

weiteres Kompensieren des Empfangssignals (101) mit einem zweiten Entzerrer (104), um durch eine Verbindung (130) zwischen einem Sender (120) und dem Empfänger (110) verursachte Imperfektionen zu kompensieren;

wobei die Vorrichtung (100) **dadurch gekennzeichnet ist, dass** sie ausgelegt ist zum:

Schätzen einer Kanalantwort (105) basierend auf einer Konfiguration des zweiten Entzerrers (104);

Extrahieren einer Übertragungsfunktion (106) der Verbindung (130) aus der Kanalantwort (105); und

Berechnen des Zielausgangs (103) für den ersten Entzerrer (102) basierend auf der Übertragungsfunktion (106) und basierend auf aus dem Empfangssignal (101) erhaltenen Bitentscheidungen (107).

2. Vorrichtung (100) nach Anspruch 1, wobei:
die Konfiguration des zweiten Entzerrers (104) eine Menge von Tap-Koeffizienten umfasst.

3. Vorrichtung (100) nach Anspruch 1 oder 2, ausgelegt zum:
Berechnen des Zielausgangs (103) für den ersten Entzerrer (102) durch Simulieren (200) der Übertragung der Bitentscheidungen (107) über einem Modell der Verbindung (130), bestimmt basierend auf der Übertragungsfunktion (106).

4. Vorrichtung (100) nach einem der Ansprüche 1 bis 3, ausgelegt zum:
Berechnen des Zielausgangs (103) für den ersten Entzerrer (103) basierend auf den Bitentscheidungen (107), erhalten durch eine Schwellenvorrichtung (201) oder durch einen Vorwärtsfehlerkorrektur- bzw. FEC-Decodierer (202).

5. Vorrichtung (100) nach einem der Ansprüche 1 bis 4, ausgelegt zum:
Schätzen der Kanalantwort (105) in der Frequenzdomäne, als ein Produkt der inversen Matrixantwort des zweiten Entzerrers (104) und einer Frequenzantwort, die das Nyquist-Kriterium für eine Intersymbolinterferenz- bzw. ISI-freie Übertragung erfüllt.

6. Vorrichtung (100) nach einem der Ansprüche 1 bis 5, wobei:
die Extraktion der Übertragungsfunktion (106) Erhalten von Effekten von polarisationsabhängigem Verlust, PDL, bei gleichzeitigem Entfernen von Effekten von Bandbreitenbeschränkungen umfasst oder Entfernen der Effekte von PDL umfasst.

7. Vorrichtung (100) nach einem der Ansprüche 1 bis 6, ausgelegt zum:
Extrahieren der Übertragungsfunktion (106) durch Schätzen einer Empfängerantwort in der Kanalantwort (105) und Entfernen der Empfängerantwort aus der Kanalantwort (105).

8. Vorrichtung (100) nach einem der Ansprüche 1 bis 7, ausgelegt zum:
Extrahieren der Übertragungsfunktion (106) in der Frequenzdomäne durch Manipulieren einer Diagonalmatrix von Singulärwertzerlegung der Kanalantwort (105).

9. Vorrichtung (100) nach Anspruch 8, wobei:
das Manipulieren der Diagonalmatrix von Singulärwertzerlegung Teilen der Matrix durch ihr größtes Element umfasst oder Ersetzen der Matrix durch eine Einheitsmatrix derselben Größe wie die Matrix umfasst.

10. Vorrichtung (100) nach einem der Ansprüche 1 bis 9, wobei:

der erste Entzerrer (102) ausgelegt ist zum unabhängigen Verarbeiten jedes von vier reellen Beiträgen des Empfangssignals (101); oder
der erste Entzerrer (102) ausgelegt ist zum gemeinsamen Verarbeiten vier reeller Beiträge des Empfangssignals (101).

11. Vorrichtung (100) nach einem der Ansprüche 1 bis 9, wobei:
der erste Entzerrer (102) ausgelegt ist zum separaten Verarbeiten von zwei reellen X-Beiträgen des Empfangssignals (101) bzw. zwei reellen Y-Beiträgen des Empfangssignals, wobei X und Y zwei orthogonale Zustände von Polarisierung sind.

12. Vorrichtung (100) nach einem der Ansprüche 1 bis 11, wobei:

der erste Entzerrer (102) einen Empfängerentzerrer umfasst, und
der zweite Entzerrer (104) einen Mehrfacheingang-Mehrfachausgang- bzw. MIMO-Entzerrer und einen BCD-Entzerrer (Bulk Chromatic Dispersion) umfasst.

13. Verfahren (500) zur Kompensation von Imperfektionen an einem kohärenten optischen Empfänger (110), wobei das Verfahren (500) Folgendes umfasst:
Erhalten (501) eines Empfangssignals (101) vom Empfänger (110):

Anpassen (502) eines ersten Entzerrers (102) basierend auf einem Zielausgang (103) für den ersten Entzerrer (102);
Kompensieren (503) des Empfangssignals (101) mit dem ersten Entzerrer (102), um durch den Empfänger (110) verursachte Imperfektionen zu kompensieren; und
weiteres Kompensieren (504) des Empfangssignals (101) mit einem zweiten Entzerrer (104), um durch eine Verbindung (130) zwischen einem Sender (120) und dem Empfänger (110) verursachte Imperfektionen zu kompensieren;
wobei das Verfahren (500) **dadurch gekennzeichnet ist, dass** es Folgendes umfasst:

Schätzen (505) einer Kanalantwort (105) basierend auf einer Konfiguration des zweiten Entzerrers (104);
Extrahieren (506) einer Übertragungsfunktion (106) der Verbindung (130) aus der Kanalantwort (105); und
Berechnen (507) des Zielausgangs (103) für den ersten Entzerrer (102) basierend auf der Übertragungsfunktion (106) und basierend auf aus dem Empfangssignal (101) erhaltenen Bitentscheidungen (107).

14. Verfahren (500) nach Anspruch 13, wobei das Verfahren (500) Folgendes umfasst:
Berechnen des Zielausgangs (103) für den ersten Entzerrer (102) durch Simulieren (200) der Übertragung der Bitentscheidungen (107) über einem Modell der Verbindung (130), bestimmt basierend auf der Übertragungsfunktion (106).

15. Computerprogramm, umfassend einen Programmcode zum Durchführen des Verfahrens (500) nach Anspruch 13 oder 14, wenn auf einem Computer ausgeführt.

**Revendications**

1. Dispositif (100) permettant de compenser des imperfections au niveau d'un récepteur optique cohérent (110), le dispositif (100) étant configuré pour :

obtenir un signal de réception (101) en provenance du récepteur (110) ;
adapter un premier égaliseur (102) sur la base d'une sortie cible (103) pour le premier égaliseur (102) ;
compenser le signal de réception (101) avec le premier égaliseur (102), afin de compenser les imperfections causées par le récepteur (110) ; et
compenser encore le signal de réception (101) avec un second égaliseur (104), afin de compenser les imperfections causées par une liaison (130) entre un émetteur (120) et le récepteur (110) ;
le dispositif (100) étant **caractérisé en ce qu'**il est configuré pour :

estimer une réponse de canal (105) sur la base d'une configuration du second égaliseur (104) ;
extraire une fonction de transfert (106) de la liaison (130) à partir de la réponse de canal (105) ; et
calculer la sortie cible (103) pour le premier égaliseur (102) sur la base de la fonction de transfert (106) et sur la base de décisions binaires (107) obtenues à partir du signal de réception (101).

2. Dispositif (100) selon la revendication 1, dans lequel :
la configuration du second égaliseur (104) comprend un ensemble de coefficients de filtre.

3. Dispositif (100) selon la revendication 1 ou 2, configuré pour :
calculer la sortie cible (103) pour le premier égaliseur (102) en simulant (200) la transmission des décisions binaires (107) sur un modèle de la liaison (130) déterminée sur la base de la fonction de transfert (106).

4. Dispositif (100) selon l'une des revendications 1 à 3, configuré pour :
calculer la sortie cible (103) pour le premier égaliseur (103) sur la base des décisions binaires (107) obtenues par un dispositif de seuil (201) ou par un décodeur à correction d'erreur directe, FEC, (202).

5. Dispositif (100) selon l'une des revendications 1 à 4, configuré pour :
estimer la réponse de canal (105) dans le domaine fréquentiel, en tant que produit de la réponse de matrice inverse du second égaliseur (104) et d'une réponse en fréquence satisfaisant au critère de Nyquist pour une transmission exempte d'interférence intersymbole, ISI.

6. Dispositif (100) selon l'une des revendications 1 à 5, dans lequel :
l'extraction de la fonction de transfert (106) comprend la préservation d'effets de pertes dépendant de la polarisation, PDL, tout en supprimant des effets de limitations de largeur de bande, ou comprend la suppression des effets des PDL.

7. Dispositif (100) selon l'une des revendications 1 à 6, configuré pour :
extraire la fonction de transfert (106) en estimant une réponse de récepteur dans la réponse du canal (105) et en supprimant la réponse de récepteur de la réponse de canal (105).

8. Dispositif (100) selon l'une des revendications 1 à 7, configuré pour :
extraire la fonction de transfert (106) dans le domaine fréquentiel, en manipulant une matrice diagonale de décomposition en valeurs singulières de la réponse de canal (105).

9. Dispositif (100) selon la revendication 8, dans lequel :
la manipulation de la matrice diagonale de décomposition en valeurs singulières comprend la division de la matrice par son plus grand élément, ou comprend le remplacement de la matrice par une matrice identité de même taille que la matrice.

10. Dispositif (100) selon l'une des revendications 1 à 9, dans lequel :

le premier égaliseur (102) est configuré pour traiter indépendamment chacun de quatre subordonnés réels du signal de réception (101) ; ou
le premier égaliseur (102) est configuré pour traiter conjointement quatre subordonnés réels du signal de réception (101).

11. Dispositif (100) selon l'une des revendications 1 à 9, dans lequel :
le premier égaliseur (102) est configuré pour traiter séparément deux subordonnés réels X du signal de réception (101) et, respectivement, deux subordonnés réels Y du signal de réception, dans lequel X et Y sont deux états de polarisation orthogonaux.

12. Dispositif (100) selon l'une des revendications 1 à 11, dans lequel :

le premier égaliseur (102) comprend un égaliseur récepteur, et
le second égaliseur (104) comprend un égaliseur à entrées et sorties multiples, MIMO, et un égaliseur à dispersion chromatique en bloc, BCD.

13. Procédé (500) permettant de compenser des imperfections au niveau d'un récepteur optique cohérent (110), le procédé (500) comprenant :

l'obtention (501) d'un signal de réception (101) en provenance du récepteur (110) ;
l'adaptation (502) d'un premier égaliseur (102) sur la base d'une sortie cible (103) pour le premier égaliseur (102) ;
la compensation (503) du signal de réception (101) avec le premier égaliseur (102), afin de compenser les imperfections causées par le récepteur (110) ; et
la compensation (504) supplémentaire du signal de réception (101) avec un second égaliseur (104), afin de compenser les imperfections causées par une liaison (130) entre un émetteur (120) et le récepteur (110) ;
le procédé (500) étant **caractérisé en ce qu'**il comprend :

l'estimation (505) d'une réponse de canal (105) sur la base d'une configuration du second égaliseur (104) ;
l'extraction (506) d'une fonction de transfert (106) de la liaison (130) à partir de la réponse de canal (105) ; et
le calcul (507) de la sortie cible (103) pour le premier égaliseur (102) sur la base de la fonction de transfert (106) et sur la base de décisions binaires (107) obtenues à partir du signal de réception (101).

14. Procédé (500) selon la revendication 13, le procédé (500) comprenant :
le calcul de la sortie cible (103) pour le premier égaliseur (102) en simulant (200) la transmission des décisions binaires (107) sur un modèle de la liaison (130) déterminée sur la base de la fonction de transfert (106).

15. Programme d'ordinateur comprenant un code de programme pour l'exécution du procédé (500) selon la revendication 13 ou 14 lorsqu'il est exécuté sur un ordinateur.

**FIG. 1**

**FIG. 2**

**FIG. 3**

XI ⟶ (N)LE (real) ⟶ 1 tap I/Q phase comp. ⟶

XQ ⟶ (N)LE (real) ⟶

**(a)**

YI ⟶ (N)LE (real) ⟶ 1 tap I/Q phase comp. ⟶

YQ ⟶ (N)LE (real) ⟶

XI ⟶ 2x2 (N)LE (real) ⟶

XQ ⟶

**(b)**

YI ⟶ 2x2 (N)LE (real) ⟶

YQ ⟶

XI ⟶ 4x4 (N)LE (real) ⟶

XQ ⟶

**(c)**

YI ⟶

YQ ⟶

**FIG. 4**

```
┌─────────────────────────────────────────────────────────────┐
│                  Obtain a receive signal.                   │
└─────────────────────────────────────────────────────────────┘
                              │
                              ▼
┌─────────────────────────────────────────────────────────────┐
│                   Adapt a first equalizer.                  │
└─────────────────────────────────────────────────────────────┘
                              │
                              ▼
┌─────────────────────────────────────────────────────────────┐
│      Compensate the receive signal with the first equalizer. │
└─────────────────────────────────────────────────────────────┘
                              │
                              ▼
┌─────────────────────────────────────────────────────────────┐
│     Compensate the receive signal with a second equalizer.  │
└─────────────────────────────────────────────────────────────┘
                              │
                              ▼
┌─────────────────────────────────────────────────────────────┐
│                  Estimate a channel response.               │
└─────────────────────────────────────────────────────────────┘
                              │
                              ▼
┌─────────────────────────────────────────────────────────────┐
│     Extract a transfer function from the channel response.  │
└─────────────────────────────────────────────────────────────┘
                              │
                              ▼
┌─────────────────────────────────────────────────────────────┐
│   Calculate the target output of the first equalizer based  │
│              on the transfer function.                      │
└─────────────────────────────────────────────────────────────┘
```

501 — Obtain a receive signal.

502 — Adapt a first equalizer.

503 — Compensate the receive signal with the first equalizer.

504 — Compensate the receive signal with a second equalizer.

505 — Estimate a channel response.

506 — Extract a transfer function from the channel response.

507 — Calculate the target output of the first equalizer based on the transfer function.

**FIG. 5**

**FIG. 6**

EP 4 046 294 B1

**FIG. 7**

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9077455 B2
- WO 2013102898 A1

### Non-patent literature cited in the description

- **G. KHANNA et al.** Joint Adaptive Pre-Compensation of Transmitter I/Q Skew and Frequency Response for High Order Modulation Formats and High Baud Rates. *Proceedings of the Optical Networking and Communication Conference OFC,* 2015
- **G. KHANNA et al.** A Robust Adaptive Pre-Distortion Method for Optical Communication Transmitters. *IEEE Photonics Technology Letters,* 2016, vol. 28 (7
- **G. KHANNA et al.** Adaptive Transmitter Pre-Distortion using Feedback from the Far-End Receiver. *IEEE Photonics Technology Letters,* 2018, vol. 30 (3
- **A. MATSUSHITA et al.** 10-WDM 64-GBaud PDM-64QAM Transmission over all-Raman Amplified 840 km SSMF using Digital Back Propagation. *Proceedings of the European Conference on Optical Communication ECOC,* 2017
- **A. MATSUSHITA et al.** High-Spectral-Efficiency 600-Gbps/Carrier Transmission Using PDM-256QAM Format. *IEEE Journal of Lightwave Technology,* 2019, vol. 37 (2
- **R. RIOS-MÜLLER et al.** Blind Receiver Skew Compensation for Long-Haul Non-Dispersion Managed Systems. *Proceedings of the European Conference on Optical Communication ECOC,* 2014
- **R. RIOS-MÜLLER et al.** Blind Receiver Skew Compensation and Estimation for Long-Haul Non-Dispersion Managed Systems Using Adaptive Equalizer. *IEEE Journal of Lightwave Technology,* 2015, vol. 33 (7